# EUROPEAN PATENT APPLICATION

(11) **EP 4 578 578 A1**
(43) Date of publication of application: **02.07.2025**
(21) Application number: 23220382.8
(22) Date of filing: 27.12.2023
(51) Int. Cl.: B23B 35/00, B26D 5/08, B26D 7/01, B26D 7/00, B09B 3/30, B26F 1/24, B26F 1/44, B09B 101/15

(54) **METHOD FOR DISMANTLING CONSUMPTION METER FOR RECYCLING**

(71) Applicant: Kamstrup A/S, 8660 Skanderborg (DK)
(72) Inventor: Laursen, Peter Schmidt, 8660 Skanderborg (DK); Nielsen, Ida Gjerlevsen, 8660 Skanderborg (DK); Holmegaard, Lotte, 8660 Skanderborg (DK)
(74) Representative: Plougmann Vingtoft a/s

(57) **Abstract**

A method for dismantling a measurement device, e.g. a consumption meter, comprising a first housing element and a second housing element fastened to the first housing element so as to enclose a stack of elements comprising at least: one circuit board comprising electronic components configured for performing a measurement of a physical parameter, and one or more additional components, such as a battery. The method comprises forcing (F_PM) at least one push member, such as 2-10 pins or mandrels, against a wall of the first housing element in a direction towards the second housing element, so as to penetrate through the wall of the first housing element. Further, continuing (C_F_PM) to apply a force on the at least one push member in the direction towards the second housing element, to cause the at least one push member to apply a force on an element of the stack of elements such that it causes another element of the stack of elements to separate the second housing element and the stack of elements from the first housing element. The dismantling can be performed with minimal damage on the elements inside the device, and thus the method is suitable as a first step of an effective recycling process for recycling separated elements of the measurement device.

## Description

### FIELD OF THE INVENTION

The present invention relates to a method for dismantling for recycling, especially the invention relates to dismantling and recycling of measurement devices.

### BACKGROUND OF THE INVENTION

Recycling, and thereby also recycling of electronic devices, has become an increasing subject in recent years. For example, modern consumption or utility meters contain many different components including electronics, batteries, polymeric materials, metals etc., and such meters today are apparatus manufactured in a simplified mass production process with a design focused on facilitating the manufacturing process.

Furthermore, due to the intended use at a consumer site, the consumption meter is manufactured to be highly resistant to any intrusion either by water or by tampering. Thus, a consumption meter is typically not built for the purpose of easy dismantling for recycling.

### OBJECT OF THE INVENTION

It is an object of the present invention to provide a method for dismantling of measurement devices, such as consumption meters.

### SUMMARY OF THE INVENTION

The invention provides in a first aspect a method for dismantling a measurement device comprising a first housing element and a second housing element fastened to the first housing element so as to enclose a stack of elements comprising at least: one circuit board comprising electronic components configured for performing a measurement of a physical parameter, and one or more additional components such as a battery, the method comprising:
- forcing at least one push member, such as 2-10 pins or mandrels simultaneously, against a wall of the first housing element in a direction towards the second housing element, so as to penetrate through the wall of the first housing element, and
- continuing to apply a force on the at least one push member in the direction towards the second housing element, to cause the at least one push member to apply a force on an element of the stack of elements such that it causes another element of the stack of elements to separate the second housing element and the stack of elements from the first housing element.

Such method is advantageous since the inventors have realized that it is possible to easily and quickly dismantle a measurement device, e.g. a consumption meter which has a stack of elements arranged inside a closed housing. Especially, the method is advantageous, since it has been tested on an existing consumption meter with a polymeric housing and having a stack of elements inside the housing. Tests have shown that it is possible to dismantle the consumption meter in an easy, but invasive way, by supporting the housing and at the same time applying a force by a push member(s) on a lower part of the housing in a direction towards the upper part of the housing. This force will cause the closed housing to open, and the stack of elements inside will fall out and can be easily collected and further processed for material separation.

The method has proven advantageous on measurement devices which have a tubular housing and where the push member has been forced through the tubular housing in its axial direction. The method has further proven advantageous on measurement devices where the second housing element is cup shaped and contains or surrounds the stack of elements and where the open end of the cup is fixated to the first housing element, e.g. by ultrasonic welding, by a snap lock mechanism or the like.

Tests have shown that a tool with such as 4-6 push members spatially distributed can be to used on a lower side of a polymeric housing of an ultrasonic water meter. The positions where the push member(s) penetrate the housing are preferably selected to avoid damaging e.g. batteries or other delicate components inside the measurement device. It is especially important not to destroy or damage batteries used in metering devices such as heat energy meters or water meters because the batteries are cell batteries and contain acid liquids. Spreading such battery liquid in a disassembly process is harmful and slows down an automated disassembly. By applying forces on the lower part of the housing, the fixed mounted upper part of the water meter housing is then pushed from the inside of the upper part by the stack of elements, and its connection with the lower side of the housing breaks, thereby leaving the housing open. By careful distribution of the position(s) of the push member(s), e.g. avoiding positions that would cause the push members to impact batteries inside the housing, the stack of elements is only slightly damaged, and can be easily collected for further separation and recycling processes. "Lower part of the housing" means the bottom part of the housing, i.e. that part which in normal operation is facing away from a human operator, and the "upper part" designates the top part that has a visible display and in normal operation is facing the human operator.

Thus, it has been verified that the method can successfully be applied on existing consumption meters and other similar measurement devices. For example, at least some existing consumption meters, e.g. water meters, are manufactured by insertion of a stack of elements from a top opening of a housing element followed by attaching, e.g. snap, click, glue or screw mounting or by vacuum sealing a second housing element in the form of a cover or lid to close off the first housing element with the stack of elements inside.

Compared to the rough method of using a saw or a hammer to open the housing of a measurement device which is not produced or intended to be opened non-invasively, it has been found that the method according to the first aspect can be used to easily and gently dismantle a measurement device in a very short time in a practical setup using a support structure designed to support the housing, and a push member tool connected to an actuator for applying the force.

The dismantling method of the first aspect can be performed manually using manually operated tools or it can be performed by a semi-automatic or automatic dismantling system, e.g. in a partly or fully robot operated process. The latter is the preferred approach for the Applicant which manufactures hundreds of thousands of water meters yearly and where a large number of meters at the end of their operating life are to be logistically collected from the end users and brought to the manufacturer for an automated and lean disassembly.

After performing the dismantling, e.g. the housing element(s) in case of a polymeric or composite or class fiber material, can be reused for other applications, e.g. after being grinded into a granulate. Other components of the measurement device can be applied to normal recycling procedures for such components.

The method has proven that it is possible to dismantle the measurement device without severely damaging any of the components inside the housing, and this facilitates further sorting and separating elements in an automated or semi-automated process. Such further sorting may include sorting the elements according to their physical properties. Especially, such properties may be color, weight, form or material (e.g. distinguishing between metal or non-metal).

Thus, such method is highly suited for recycling without requiring many resources for the initial dismantling.

In the following preferred features and embodiments will be described.

The method preferably comprises positioning the first housing element on a mechanical support prior to forcing the at least one push member against the wall of the first housing element. Hereby, the necessary force can be applied to the wall of the first housing element while it is supported.

The method may comprise positioning an upper mechanical support serving to fix the position of the first housing element and with opening(s) to guide the at least one push member into engagement with the wall of the first housing element.

The at least one push member is preferably one of: a mandrel, a rod, and a pin. The push member is preferably selected to match the material properties and dimensions of the housing element to be penetrated. Using a tapered end of the push member, it has been found to be possible to penetrate e.g. a polymeric water meter housing. With a prior step of drilling through at least a part of the material of the first housing element, it may be possible to use a push member with a flat end. A flat end may be preferred with respect to the pushing on the stack of elements compared to a tapered end which may create more damage on the stack of elements.

Preferably, the method involves applying a force by means of a plurality of push members, such as 2-10 mandrels rods or pins, spatially arranged to penetrate through indicator zones of the wall of the first housing element. Especially, such as 3-10, push members may be spatially distributed so as to penetrate indicator zones of the wall of the first housing element. Especially, it may be preferred that the plurality of push members are spatially arranged to penetrate symmetrically or substantially symmetrically arranged indicator zones of the wall of the first housing element. The use of more push members, and more specifically symmetrically arranged push members may facilitate the pushing of the stack of elements towards the second housing element. The indicator zones are areas of the first housing element which indicate where the push member or all push members must be applied so as to penetrate the housing wall and initiate the cascading action of forcing one element of the stack to push another element of the stack and to separate the second housing element and the stack of elements from the first housing and at the same time not damage or break open the batteries. The indicator zones are preferably placed in the bottom of the measurement device and can in their simplest version be a painted dot, or it can be a material weakness in the bottom, or it can be a small hollow cylinder, raised from the bottom and ready to receive a push member.

The at least one push member may have a portion for penetrating the wall of the first housing element when forced in a penetration direction, and wherein said portion has an extension perpendicular to said penetration direction which is at least 1 %, such as at least 2 %, such as at least 5 %, such as at least 10 %, of a maximum outer dimension of the first housing element.

Especially, the measurement device may have a first housing element comprising a straight flow tube part with a through-going opening, wherein the flow tube part is integrated with a container structure which has a closed lower part and an upper part with an opening, wherein the container structure and the second housing element are configured for enclosing the stack of elements when the consumption meter is in an assembled state. More specifically, the method may comprise positioning the first housing element on a support structure which supports the flow tube part, and wherein the at least one push member is forced to penetrate through a wall of the bottom of the container structure. More specifically, the flow tube part may have a measuring insert fastened inside, and wherein the method comprises forcing a push member from an end of the through-going opening of the flow tube, so as to force the measuring insert to separate from the first housing element.

The first housing element may especially be a monolithic element made of a polymeric material or a mineral glass material or a composite material. The second housing element may especially be a monolithic element made of a polymeric material or a mineral glass material or a composite material.

In some embodiments, the method is performed on a measurement device wherein the first housing element forms a container with a lower part and an upper part having an opening, and wherein the second housing element comprises a cover element which is fastened to the upper part of the first housing element to close off the opening to form an enclosure for the stack of elements.

It may be preferred to perform the method on a measurement device, where the wall of the first housing element has at least one penetration zone arranged to facilitate penetration of the wall by the at least one push member. A penetration zone can be implemented in various ways. In some embodiments, said at least one penetration zone is at least one zone of wall having a reduced material thickness compared to other parts of the wall, so as to facilitate penetration of the associated push member. E.g. the material thickness may be reduced to 10-90%, e.g. 10-50%, of the material thickness of other parts of the wall. The penetration zone may also be implemented by having an increased material thickness compared to other parts of the wall, or the breaking zone may be implemented as a combination of a zone part with an increased material thickness and an adjacent zone with a reduced material thickness compared to other parts of wall.

The measurement device may especially be a consumption meter, such as one of: a water meter, a gas meter, a heat meter, a cooling meter, an electric meter.

In other variants, the measurement device comprises a pressure sensor for sensing a gas or liquid pressure, wherein the pressure sensor is arranged inside an enclosure formed by the first and second housing elements. Still other types of measurement devices may be dismantled using the method according to the first aspect.

It may be preferred to perform a step of drilling one or more through-going or non-through-going holes on selected positions on the wall of the first housing element, so as to facilitate subsequent penetration of the one or more push members through a material of the first housing element. This can facilitate the penetration of the first housing element at the cost of additional time for such extra step. However, it may be possible to use a push member or push members with a bigger end size, and that may be preferred with respect to pushing on the stack of elements without causing unnecessary damage to the components of the stack of elements.

In some embodiments, the method comprises dismantling a measurement device, where the circuit board comprises electronic components configured for performing ultrasonic flow measurements in a measuring tube.

After applying the force, e.g. involving an automatic or semi-automatic actuator, the method preferably comprises stopping applying a force on the at least one push member, when it has been detected that the elements have separated.

After the dismantling of the measurement device and separating the elements, the housing element(s), and the elements of the stack of elements may be collected as separate components. Furthermore, separate recycling procedures may be performed on these components.

In some embodiments, the method is performed on a measurement device wherein the first housing element forms a cavity with an opening which is closed off by a second housing element in the form of a cover element.

In some embodiments, the method is performed on a measurement device wherein the first housing element only forms a limited cavity or no cavity, while the second housing element forms a cavity. Especially, the first housing element may be integrated with a straight flow tube part with a through-going opening, such as for fluid flow measurements, and wherein the second housing element forms a cavity in which at least a part of the stack of elements is accommodated.

In some embodiments, the method is performed on a measurement device wherein the first and second housing elements are shaped to mutually form an enclosure when being in an assembled state.

The stack of elements may comprise one or more intermediate elements between the first and second elements, and even though such intermediate elements are included, the stack of elements serve to cascade a push force applied to the first element, via the intermediate element(s), to the second element.

In a second aspect, the invention provides a system for automatic or semi-automatic dismantling an associated measurement device comprising a first housing element and a second housing element fastened to the first housing element so as to enclose a stack of elements comprising at least: one circuit board comprising electronic components configured for performing a measurement of a physical parameter, and one or more additional components such as a battery, the system comprising
- a push tool comprising at least one push member, such as 2-10 push members,
- an actuator configured to apply a force on the push tool, and
- a control system configured to operate the actuator, so as to allow performing the method according to the first aspect on the associated measurement device.

The system preferably comprises a support structure shaped to support a part of the housing. Especially, it is preferred that the support structure can support a part of the first housing element, such as a peripheral part of the first housing element, without hindering the second housing element to separate from the first housing element. Especially, the support structure may have a through-going opening arranged to receive the first housing element with the second housing element facing downwards, and with support faces serving to support protruding parts of the first housing element, such as flow tube parts integrated with the first housing element, and wherein said support faces are adjacent to said through-going opening.

The system may comprise an upper mechanical support serving to fix the position of the housing element(s) and with opening(s) to guide the at least one push member into engagement with the first housing element.

In a third aspect, the invention provides a collection of separate elements obtained by applying the method according to the first aspect on a measurement device, such as a consumption meter. Especially, such collection of separate elements may comprise at least: a housing element, at least one circuit board comprising electronic components, one or more batteries, a polymeric insert for housing a desiccant, a transparent element, and a polymeric cover element.

### BRIEF DESCRIPTION OF THE FIGURES

The method and system will now be described in more detail. The figures show examples of implementing the present invention and is not to be construed as being limiting to other possible embodiments falling within the scope of the attached claim set.
FIG. 1A and 3D view of a consumption meter embodiment,
FIG. 1B illustrates an exploded side view of a consumption meter embodiment with a stack of elements with electronics and batteries inside a housing with a lid and a lower housing element with penetration zones on its lower side of the lower housing element,
FIG. 1C shows an exploded 3D view of a consumption meter embodiment having a stack of elements mounted in a lower housing element which is closed off by an upper element in the form of a lid,
FIG. 1D and 1E illustrate the function of a locking element serving as breaking zone between housing and the stack of elements inside the housing,
FIG. 2-4 show examples of elements of a system for dismantling a measurement device, these elements include a support and a push tool with a plurality of push members,
FIG. 5 shows examples of differently shaped tips of the push member,
FIG. 6 shows a 3D view of a consumption meter mounted in a support structure and with a push tool serving to dismantle the consumption meter,
FIG. 7 and 8 show a lower 3D view and a transparent side view of a consumption meter mounted in a support structure, where push members have separated one housing element from a cover element and the stack of elements inside,
FIG. 9 shows steps of a method embodiment,
FIG. 10 shows an example of a force profile applied during dismantling of a consumption meter, and
FIG. 11 shows a block diagram of a system embodiment.

### DETAILED DESCRIPTION

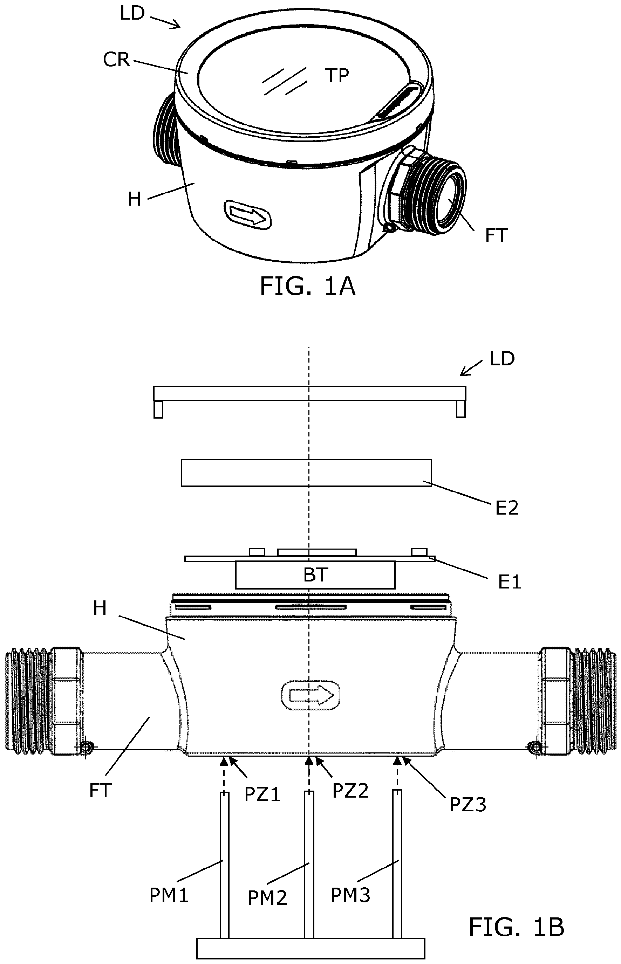

FIG. 1A shows a view of a functioning measurement device in its assembled state before it is being disassembled, namely a consumption meter, more specifically an ultrasonic flow meter or water meter. The flow meter has a flow tube FT with a through-going passage of fluid, e.g. water, between an inlet and an outlet. A housing element H is formed as an integrated part of the flow tube FT thereby providing a compartment for meter components arranged at the flow tube FT to measure the flow rate of a fluid flowing in the fluid passage. The housing H and flow tube FT may be formed by a polymer material or a composite material or a mineral glass material. A lid LD in the form of a closing ring CR together with a transparent panel TP serves to close off the housing element H.
FIG. 1B illustrates an exploded side view of a consumption meter embodiment with a stack of elements E1, E2 inside a housing element H and with penetration zones PZ1, PZ2, PZ3 on the lower side. The stack of elements E1, E2 is arranged, in an assembled state, inside an enclosure formed between the housing element H which has a tubular shaped container part and the lid LD which serves to close off the enclosure. The stack of elements E1, E2 are arranged with its main axis parallel with an axis (dashed line) which is a central axis of the tubular shape formed by the container part of the housing element H.

The housing element H is integrated with a flow tube FT with a through-going opening for fluid, e.g. water. The lower element E1 is arranged at a bottom part of the housing element H. The lower element E1 of the stack of elements comprises a circuit board with electronic components configured for measuring flow rate of a fluid flowing through the flow tube FT, further a lower side of the circuit board may comprise one or two ultrasonic transducers for ultrasonic measurements of fluid flow in the flow tube FT. Still further, batteries BT for powering the electronic components are also positioned on the lower element E1.

Further, a push tool is shown with push members PM1, PM2, PM3 arranged for engaging with the respective penetration zones PZ1, PZ2, PZ3 to penetrate the housing element H in a direction indicated by the dashed arrows, i.e. a direction towards the lid LD, parallel with the central axis (dashed line) of the tubular shaped container part of the housing element H.

The penetration zones PZ1, PZ2, PZ3 are zones with a reduced strength against application of a force by the push members PM1, PM2, PM3. The penetration zones PZ1, PZ2, PZ3 are positioned distributed on a lower side of the housing element H at selected positions, so that the push members PM1, PM2, PM3 will not hit and damage delicate components inside the housing element H. Especially, two batteries BT are positioned on the lower element E1 of the stack of elements. It is especially important that the penetration zones (PZ1, PZ2, PZ3) are positioned so in relation to position of the batteries BT, that the push members PM1, PM2, PM3 will not hit the batteries BT when entering the enclosure of the housing element H. Preferably, the penetration zones PZ1, PZ2, PZ3 are further positioned so that the push members PM1, PM2, PM3 will not penetrate the flow tube FT.

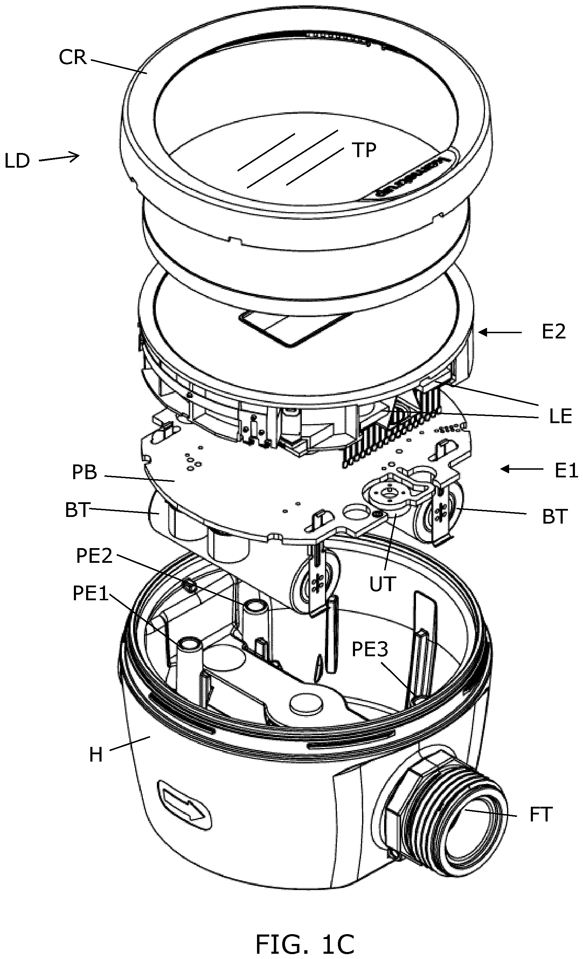

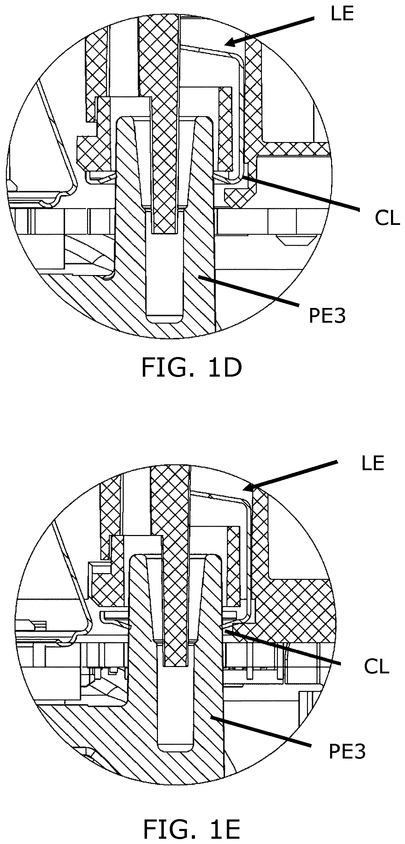

An upper element E2 is arranged between the lower element E1 and the lid LD, and this intermediate element E2 may comprise an insert with an enclosed cavity containing a desiccant. Further this element can include a locking element, see locking element LE of FIG. 1C, in the form of claws serving to lock the two elements E1 and E2 in position by engagement with a protrusion, see protrusion PE3 of FIG. 1C, inside the housing element H. Especially, it is preferred that this locking element is designed so as to allow locking onto the housing element H when inserted and forced downwards from the opening of the housing element H, and at the same time the locking element should be designed to allow a release of the locking position, when forced in an upward direction. Thereby, the dismantling process is facilitated. As shown in FIG. 1D and 1E, this may be implemented by claws or barbs CL angled in one direction so as to grip onto the protrusion PE3 of the housing element H when the element E2 is inserted downwards, while the claws or barbs CL are shaped such that, when applied by a force of a certain magnitude in an upward direction caused by the push member, the claws or barbs CL will bend in the opposite direction and thereby release the grip. Thus, the measurement device may include breaking zones which are activated by the push member(s) once they have penetrated the housing wall. The claws or barbs CLjust described are an example of breaking zones.

It is to be understood that the stack of elements E1, E2 may comprise one or more intermediate elements arranged to cascade a push force between the first and second elements E1, E2 in the dismantling process.

In a dismantling process, when the push members PM1, PM2, PM3 have penetrated the penetration zones PZ1, PZ2, PZ3, the push member PM1, PM2, PM3 are further forced through the first housing element, and thereby the push members PM1, PM2, PM3 will force the lower element E1 towards to the upper element E2, which in turn will apply a force on the lid LD to cause the lid LD to break away from the housing element H and to further push the stack of elements E1, E2 away from the housing element H.

In this way, a simple and fast dismantling procedure can be provided, and the penetration zones PZ1, PZ2, PZ3 serve to facilitate the process and reduces the necessary force to penetrate the housing H even in case the housing element H is made of a high strength material, for example the polymeric or mineral glass or composite material housing of a consumption meter. A low penetration force reduces the risk of damaging the housing element H during the dismantling process, and thereby the quality of the separated components and the dismantling is improved. If the mechanical pressing force is too high, the flow tube protrusions will break in the areas where they extend from the container of the housing element.

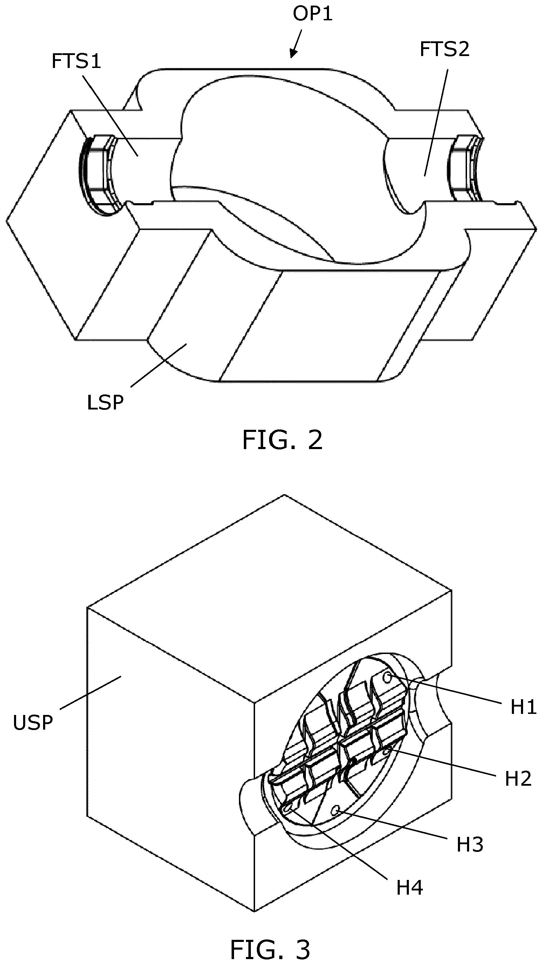

FIG. 2 and 3 show examples of respective support structures to support a housing of a measurement device while being dismantled. The support structure should be designed specifically to fit to the shape of the housing of the measurement device, so as to allow an effective support during the dismantling process, i.e. to provide enough support allowing the necessary force to be applied to the push member(s) and still to allow the cover element to separate from the housing element.

FIG. 2 shows a lower support structure LSP for support of a housing element of a measurement device similar to the flow meter of FIG. 1, namely with supports FTS1, FTS2 for the flow tube parts protruding from the housing element, and with a through-going opening OP1 for receiving the housing element with the cover element facing downwards. The support structure LSP is preferably made of a metal, e.g. aluminium or cast iron, in order to be able to withstand the radial forces generated from the housing element during the penetration process. The internal diameter of the through-going opening of the supports structure LSP essentially corresponds to the largest diameter of the first housing element.

FIG. 3 shows an upper support structure USP for use together with the lower support structure LSP, i.e. with a surface shaped to match a lower surface of the housing element of the measurement device to be dismantled, and serving to fix the position of the housing element, when the upper support structure USP is placed on top of the lower support structure LSP, with the measurement device fixed therebetween. The upper support structure USP further has through-going holes, in the shown example four holes H1, H2, H3, H4 are visible. These holes H1, H2, H3, H4 serve to guide push members towards the lower part of the housing element of the measurement device, when fixed between the upper and lower support structures USP, LSP.

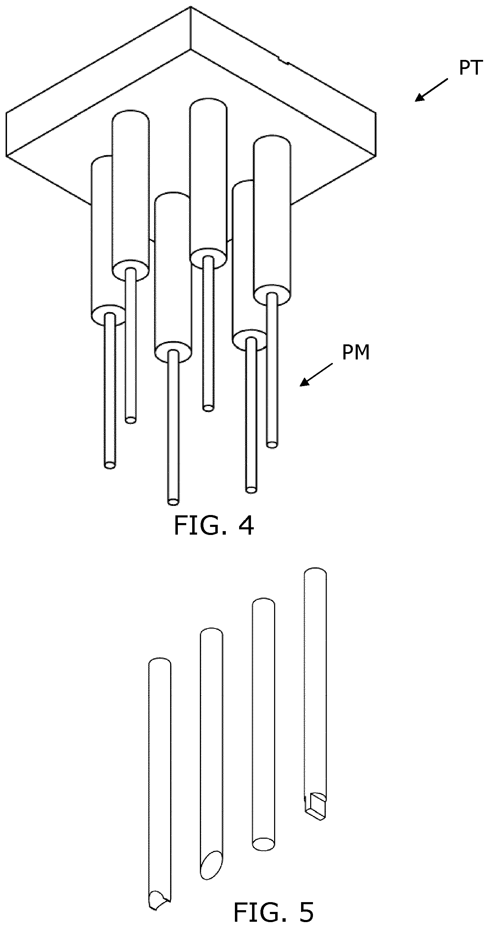

FIG. 4 shows a push tool PT with a plurality of parallel push members PM at selected positions, here shown in the form of six rods or pins attached to a common structure at one end, and with their respective free tips positioned in one plane. The push tool PT is shaped to be inserted from an upper side of the upper support structure USP of FIG. 3, such that the holes H1, H2, H3, H4 serve to guide the push members into engagement with the lower surface of the housing element of the measurement device.

FIG. 5 shows examples of four differently shaped tips for the push member PM. The preferred tip shape depends on the material of the housing element to be penetrated and other factors. A tapered end, e.g. as shown for push member number one, two and four from the left in FIG. 5, may be preferred to allow easier penetration through the material of the housing element. A flat tip, as push member number three from the left in FIG. 5, may be preferred for less damage of the elements inside the housing when pushing these elements.

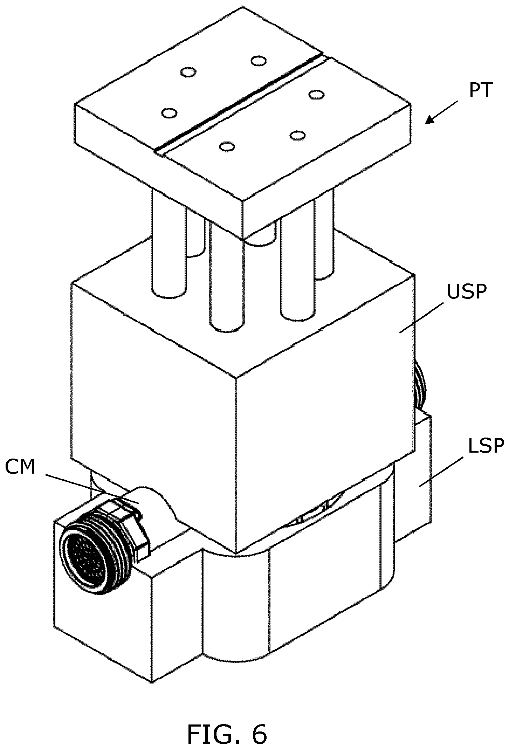

FIG. 6 shows a 3D view of a consumption meter CM similar to the one in FIG. 1A and 1B mounted between the lower and upper support structures LSP, USP from FIG. 2 and 3 and with the push tool PT from FIG. 4 inserted through the upper support structure USP.

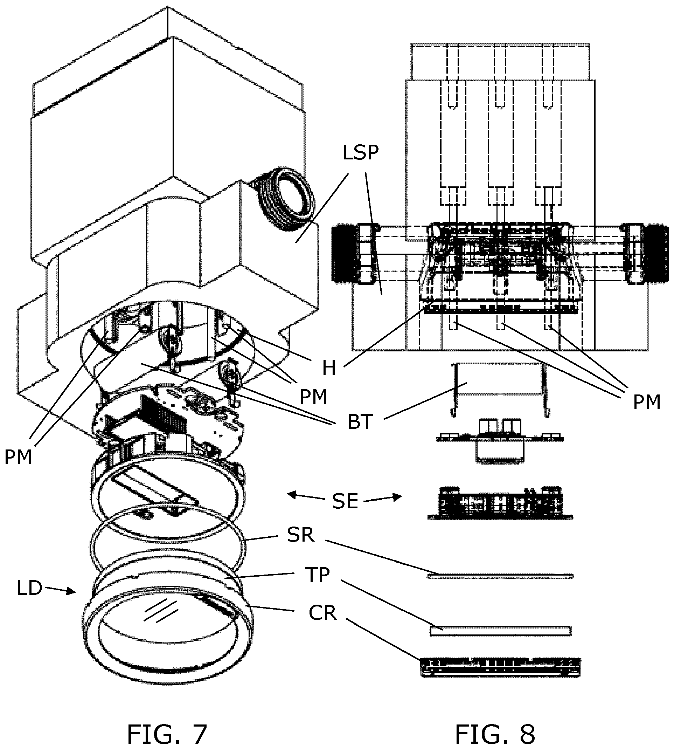

FIG. 7 shows a lower 3D of the same setup as in FIG. 6, here it is visible that the push members have forced the housing element H and the lid LD to separate, and thus the push members PM have pushed the stack of elements SE inside the housing element H to separate from the housing element H, e.g. by gravity, thus leaving these elements SE ready for collection for further processing in respective recycling processes. Especially, the batteries BT are preferably left undamaged by the push members PM and the batteries BT can therefore be collected for separate recycling. The lid LD is here shown separated into closing ring CR, sealing ring SR and transparent panel TP, and these components are preferably processed separately in a further recycling process.

Advantageously a cavity or a bin is placed below the through-going opening OP1 of the lower support structure such that the stack of elements SE can be displaced in a direction away from the opening and into the cavity or bin.

FIG. 8 shows a transparent side view of the setups of FIG. 6 and 7, and here the position of some of the push members PM are clearly seen in relation to the housing element H. The tips of the push members PM have been forced all the way from the lower surface of the housing element H and to a final position where the tips of the push members PM have been forced through the entire height of the housing element and are seen in FIG. 8 at a stop position outside an upper opening of the housing element H.

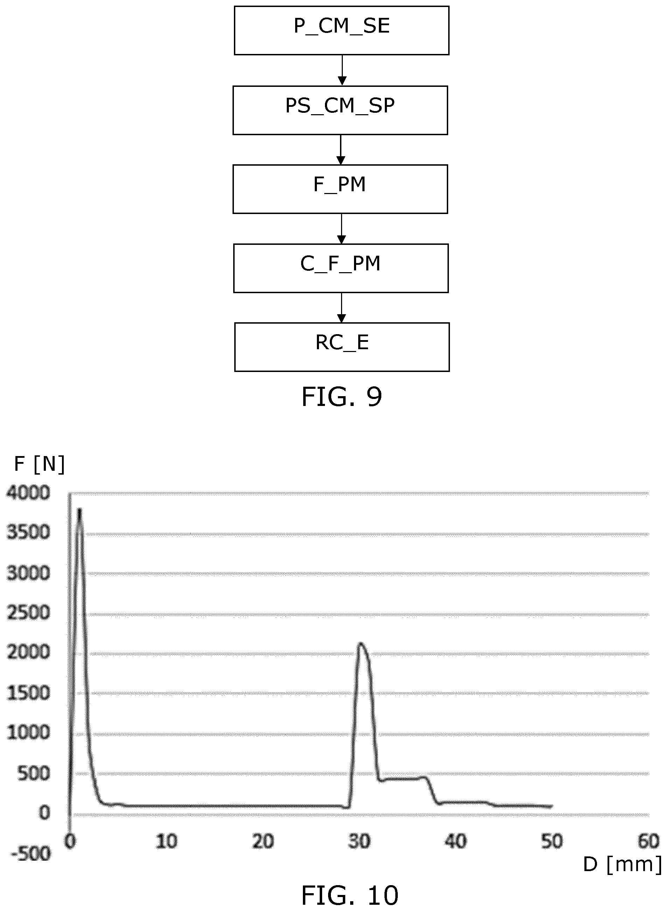

FIG. 9 shows steps of an embodiment of the inventive method of dismantling a measurement device, preferably a consumption meter, such as for recycling purposes. The method comprises providing P_CM_SE a measurement device, e.g. a consumption meter, comprising a housing, wherein the housing comprises a housing element and a cover element fastened to the housing element so as to cover an opening of the housing element, wherein the housing element encloses a stack of elements comprising at least: one circuit board comprising electronic components configured for performing a measurement of a physical parameter, and one or more additional components, such as a battery.

Next, positioning PS_CM_SP the consumption meter at a support structure supporting a protruding part of the housing. Further, forcing F_PM at least one push member, preferably 2-10 rods or pins or mandrels simultaneously, against an exterior part of the housing element in a direction towards the cover element, so as to penetrate through the exterior part of the housing element into the interior part. Further, continuing C_F_PM to apply a force on the at least one push member in the direction towards the cover element, to cause the at least one push member to apply a force on a lower element of the stack of elements and thereby causing an upper element of the stack of elements to force the cover element and the stack of elements to separate from the housing element.

Finally, FIG. 9 shows a preferred step RC_E of recycling the elements from the stack of elements according to separate recycling procedures. Furthermore, the housing element may also be applied to a recycling process, e.g. involving a grinding process, to allow the polymeric or mineral glass of composite material of the housing element to be reused as material in another type of application.

Especially, before the step of recycling RC_E, an intermediate step of sorting the separated elements, e.g. sorting the elements according to their physical properties. Especially, such properties may be color, weight, form or material (e.g. distinguishing between metal or non-metal).

FIG. 10 shows a curve illustrating the mechanical force F applied to push members versus distance D during a process of dismantling the above-described consumption meter, where the distance D zero is when the push members enter into contact with the wall of the consumption meter.

When the push members are moved towards the wall of the consumption meter, a force peak is seen, when the push members penetrate through the wall, and a force F of 3870 N is measured as a peak force in the present example. After the push members have penetrated the wall, the force F drops to almost zero, and the force F increases again up to 2100 N at about a distance D of 30 mm corresponding to the push members reaching the stack of elements inside the housing of the consumption meter and. At this point, the stack of elements is pressed against the lid LD, and the locking mechanism(s) for the stack of elements are broken along with the lid LD being pushed open, and the force F drops to 475 N. At a distance D of about 38 mm the stack of elements will fall out of the housing, and the force drops to about zero, and the dismantling processes has been completed.

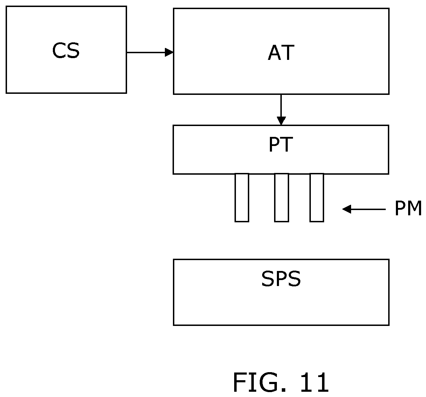

FIG. 11 illustrates a block diagram of elements of a system embodiment for performing the dismantling method of the first aspect and such as exemplified in FIG. 9 in an automated or semi-automated version. The system comprises a push tool PT comprising at least one push member PM, such as 2-10 push members, preferably parallel rods or pins with tapered or plane tips. The system further comprises an actuator AT configured to apply a force on the push tool PT, and a control system CS configured to operate the actuator AT, so as to allow performing the method according to the first aspect on an associated measurement device, e.g. a consumption meter. The actuator may be a linear electric actuator, a pneumatic or hydraulic actuator or the like. The control system CS may be programmed to cause the actuator AT to gradually move the push tool in a linear movement towards engagement with the housing element of the measurement device and to stop progressing the movement of the push tool when a stop criterion has been met, e.g. by a manual stop or when it has been detected that the stack of elements have been separate from the housing element, e.g. using a camera or the like, or using an electric amperage profile over time, and when the amperage drops below a predetermined limit, then stop.

The system preferably also comprises a support structure SPS for supporting or fixing the housing of the associated measurement device during the dismantling procedure, and e.g. the support structure SPS has a cavity for collecting elements of the measurement device after they have been separated.

To sum up, the invention provides a method for dismantling a measurement device, e.g. a consumption meter, comprising a first housing element and a second housing element fastened to the first housing element so as to enclose a stack of elements comprising at least: one circuit board comprising electronic components configured for performing a measurement of a physical parameter, and one or more additional components, such as a battery. The method comprises forcing (F_PM) at least one push member, such as 2-10 pins or mandrels, against a wall of the first housing element in a direction towards the second housing element, so as to penetrate through the wall of the first housing element. Further, continuing (C_F_PM) to apply a force on the at least one push member in the direction towards the second housing element, to cause the at least one push member to apply a force on an element of the stack of elements such that it causes another element of the stack of elements to separate the second housing element and the stack of elements from the first housing element. The dismantling can be performed with minimal damage on the elements inside the device, and thus the method is suitable as a first step of an effective recycling process for recycling separated elements of the measurement device.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

## Claims

1. A method for dismantling a measurement device comprising a first housing element (H)and a second housing element (LD) fastened to the first housing element so as to enclose a stack of elements comprising at least: one circuit board comprising electronic components configured for performing a measurement of a physical parameter, and one or more additional components, such as a battery, the method comprising:
- forcing (F_PM) at least one push member, such as 2-10 mandrels simultaneously, against a wall of the first housing element in a direction towards the second housing element, so as to penetrate the wall of the first housing element, and
- continuing (C_F_PM) to apply a force on the at least one push member in the direction towards the second housing element, to cause the at least one push member to apply a force on an element of the stack of elements such that it causes another element of the stack of elements to separate the second housing element and the stack of elements from the first housing element.

2. The method according to claim 1, further comprising positioning the first housing element on a mechanical support and then forcing the push member through the wall of the first housing element and collecting the stacked elements in a cavity placed below an opening in the mechanical support.

3. The method according to claim 1 or 2, wherein the at least one push member is one of: a mandrel, a rod, and a pin.

4. The method according to any of the preceding claims, wherein the at least one push member comprises a plurality of push members, such as mandrels rods or pins, spatially arranged to penetrate through indicator zones of the first housing element where the indicator zones indicate places on the first housing element where push members can penetrate without breaking open batteries.

5. The method according to any of the preceding claims, wherein each of the plurality of push members comprise a tapered end for penetrating through the wall of the first housing element.

6. The method according to claim 4 or 5, comprising at least three, such as 3-10, push members spatially distributed, so as to penetrate respective zones of the wall of the first housing element.

7. The method according to any of claims 4-6, wherein the plurality of push members are spatially arranged to penetrate symmetrically or substantially symmetrically arranged zones of the wall of the first housing element.

8. The method according to any of the preceding claims, wherein at least one of the at least one push member has a portion for penetrating the wall of the first housing element when forced in a penetration direction, and wherein said portion has an extension perpendicular to said penetration direction which is at least 1 %, such as at least 2 %, such as at least 5 %, such as at least 10 %, of a maximum outer dimension of the first housing element.

9. The method according to any of the preceding claims, wherein the first housing element comprises a straight flow tube part with a through-going opening, wherein the flow tube part is integrated with a container structure which has a closed lower part and an upper part with an opening, wherein the container structure and the second housing element are configured for enclosing the stack of elements when the consumption meter is in an assembled state.

10. The method according to claim 9, comprising positioning (PS_CM_SP) the first housing element on a support structure which supports the flow tube part, and wherein the at least one push member is forced to penetrate through a wall of the bottom of the container structure.

11. The method according to claim 9 or 10, wherein the flow tube part has a measuring insert fastened inside, and wherein the method comprises forcing a push member into an end of the through-going opening of the flow tube, so as to force the measuring insert to separate from the first housing element.

12. The method according to any of claims 9-11, wherein the first housing element is a monolithic element made of a polymeric material or a mineral glass material or a composite material.

13. The method according to any of the preceding claims, wherein the first housing element forms a container with a lower part and an upper part having an opening, and wherein the second housing element comprises a cover element which is fastened to the upper part of the first housing element to close off the opening to form an enclosure for the stack of elements.

14. The method according to any of the preceding claims, wherein the measurement device is a consumption meter, such as one of: a water meter, a gas meter, a heat meter, a cooling meter, an electricity meter.

15. The method according to any of the preceding claims, comprising drilling one or more through-going or non-through-going holes on selected positions on the wall of the first housing element, so as to facilitate subsequent penetration of the one or more push members through a material of the wall of the first housing element.

16. The method according to any of the preceding claims, further comprising performing (RC_E) separate recycling procedures on the first housing elements, and the elements of the stack of elements after the separation.

17. A system for automatic or semi-automatic dismantling a measurement device comprising a first housing element (H) and a second housing element (LD) fastened to the first housing element (H) so as to enclose a stack of elements (SE) comprising at least: a circuit board (PB) comprising electronic components configured for performing a measurement of a physical parameter, and one or more additional components, such as a battery, the system comprising
- a push tool (PT) comprising at least one push member (PM), such as 2-10 push members,
- an actuator (AT) configured to apply a force on the push tool (PT), and
- a control system (CS) configured to operate the actuator (AT), so as to allow performing the method according to any of claims 1-16 on the associated measurement device.
